Europäisches Patentamt

(19) European Patent Office

Office européen des brevets

(11) Numéro de publication : **0 102 295**
**B1**

(12) **FASCICULE DE BREVET EUROPÉEN**

(45) Date de publication du fascicule du brevet :
04.03.87

(21) Numéro de dépôt : **83401685.9**

(22) Date de dépôt : **19.08.83**

(51) Int. Cl.⁴ : **F 16 J   3/04**

(54) **Vérin ultra-plat de mesure de contraintes et procédé de fabrication.**

(30) Priorité : **27.08.82 FR 8214746**

(43) Date de publication de la demande :
**07.03.84 Bulletin 84/10**

(45) Mention de la délivrance du brevet :
**04.03.87 Bulletin 87/10**

(84) Etats contractants désignés :
**AT BE CH DE FR GB IT LI**

(56) Documents cités :
**CH-A-   595 572**
**DE-A- 2 904 844**
**FR-A- 1 253 895**
**FR-A- 1 438 577**
**FR-A- 2 121 358**
**FR-A- 2 304 802**
**FR-A- 2 306 353**
**GB-A-   746 102**
**SU-A-   624 060**
**SU-A-   724 949**
**US-A- 2 487 947**
**US-A- 2 522 401**
**US-A- 2 966 871**
**US-A- 3 201 111**
**US-A- 4 326 420**

(73) Titulaire : **ETAT FRANCAIS représenté par Le Ministère de l'Urbanisme et du Logement LABORATOIRE
CENTRAL DES PONTS ET CHAUSSEES
58 boulevard Lefebvre
F-75732 Paris Cedex 15 (FR)**

(72) Inventeur : **Abdunur, Charles Sam
41, rue de Cronstadt
75015 Paris (FR)**

(74) Mandataire : **Thevenet, Jean-Bruno et al
Cabinet BEAU DE LOMENIE 55 rue d'Amsterdam
F-75008 Paris (FR)**

## Description

L'invention concerne un vérin ultra-plat de mesure des contraintes.

Dans un ouvrage en béton, la mesure directe des contraintes internes absolues est un élément essentiel pour évaluer ses capacités résiduelles de résistance. En l'absence de tous autres moyens, une méthode directe de mesure de contraintes par libération a été adoptée. Elle consiste à pratiquer une entaille dans le béton avec une scie circulaire, puis à rétablir le champ de déplacements à l'aide d'un vérin ultra-plat adapté à cette entaille. La pression de compensation indique la contrainte recherchée. C'est une méthode utilisée en mécanique des roches mais dont la transposition brutale au béton avait, dans le passé conduit à des échecs. En effet, les différences d'échelle et de nature entre les deux matériaux exigent la prise en compte d'un nombre accru de paramètres.

On connaît déjà, par les documents US-A-4 326 420 et DE-A-2 904 844 des vérins de mesures de forces dans une entaille pratiquée dans le béton, ou un autre milieu.

Mais les vérins, conçus sous une forme circulaire, présentent au sein d'une entaille faite par scie circulaire une surface toujours différente de la surface libérée par l'entaille, la différence étant encore augmentée par le fait que la surface active du vérin est réduite en raison de sa déformation convexe.

De ce fait, ces vérins ne peuvent pas être utilisés de façon simple et fidèle pour mesurer les contraintes internes absolues, et encore moins pour accéder au gradient de contraintes par une gamme d'entailles de grandeurs échelonnées.

Le but de l'invention est de proposer une nouvelle structure de vérin plat, ainsi qu'une technologie particulière de fabrication, exempte des inconvénients précités et conciliant au mieux les impératifs suivants :

— une miniaturisation imposée par le souci de réduire le caractère destructif de la mesure ;

— une minimisation de raideur propre, rendue difficile par la miniaturisation et pourtant indispensable pour que la transmission de la pression aux parois de l'entaille, soit fidèle et uniforme ;

— une résistance permettant à la pression d'atteindre le niveau des contraintes rencontrées dans les ouvrages auscultés,

— une application du vérin sensiblement à l'intégralité des parois de l'entaille.

Ce but est atteint selon l'invention du fait que le vérin se compose essentiellement d'une chambre délimitée par deux flancs en regard conformés en segments de cercle, un obturateur du bord rectiligne de la chambre, les bords circulaires des flancs étant retournés vers l'intérieur de plus de 90° et assemblés l'un contre l'autre avantageusement par une soudure souple.

Cette structure particulière des bords permet aux flancs du vérin de se déplacer, sous l'influence de la pression, sensiblement parallèlement à eux-mêmes, les bords circulaires soudés se déployant un peu à la manière d'un accordéon.

Les bords rectilignes des flancs sont avantageusement assemblés par un obturateur en U qui leur est brasé. Cet assemblage, moins souple que celui des bords circulaires, convient mieux aux bords rectilignes puisqu'ils se trouvent au-dessus de l'entaille de mesure. En effet, l'excès de pression de la partie en U, non équilibré, neutralise la rigidité de l'obturateur à la flexion ; par ailleurs, la forme en U résiste mieux que la forme en W à la poussée vers l'extérieur ; enfin cette forme présente moins de difficultés technologiques de construction.

La forme en segment de cercle des vérins de l'invention permet à ceux-ci de correspondre exactement à la forme des entailles circulaires, et donc de mesurer avec fidélité les contraintes ; par des entailles successives, on peut accéder à la connaissance directe du gradient de contraintes.

L'épaisseur des vérins de l'invention est avantageusement de l'ordre de 4 mm.

L'invention sera mieux comprise à la lecture de la description qui va suivre faite en référence aux dessins annexés sur lesquels :

la figure 1   montre en vue de face un vérin de l'invention ;

la figure 2   est une section II-II de la figure 1, qui précise également la position du vérin par rapport au milieu ausculté, représenté en hachures ;

la figure 3   montre en agrandi le détail supérieur de la figure 2, c'est-à-dire l'assemblage des bords rectilignes des flancs avec l'obturateur en U,

la figure 4   montre en agrandi le détail inférieur de la figure 2, c'est-à-dire l'assemblage des bords circulaires des flancs,

la figure 5   est un schéma d'une installation de fabrication des flancs d'un vérin conforme à l'invention,

la figure 6   représente le détail des pavés de raccordement au circuit hydraulique (coupe VI-VI de la figure 1),

la figure 7   représente l'étape de mise en forme de l'obturateur d'un vérin de l'invention.

Le vérin ultra-plat 1 comporte deux flancs 2 et 3 en segments de cercle de rayon R = 150 mm par exemple, réalisés dans une tôle de 0,4 mm d'épaisseur. On peut prévoir par exemple une gamme de vérins fabriqués avec des hauteurs de pénétration respective $h$ de 20, 30, 40, 50, 60 mm pour une même épaisseur $e$ de 4 mm, la hauteur totale H étant légèrement supérieure.

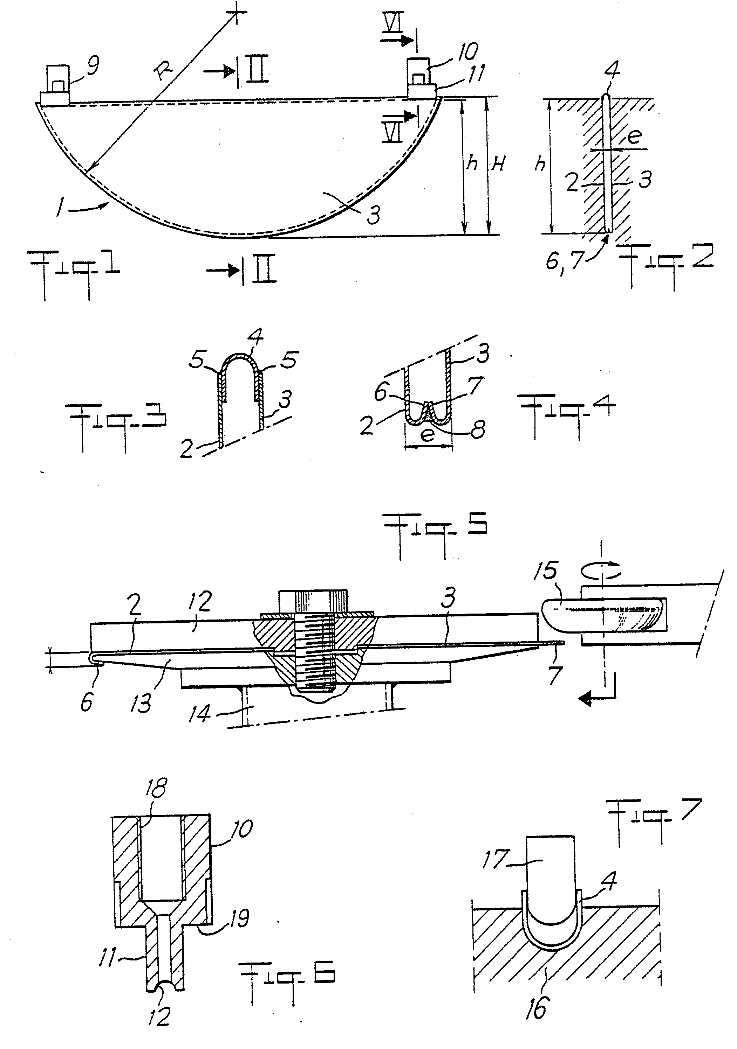

Les bords rectilignes supérieurs des flancs 2 et 3 sont assemblés au moyen d'un obturateur 4 longitudinal en forme de U, solidarisé par des soudures 5 aux bords des flancs qui enserrent les côtés de l'obturateur 4 (figure 3).

Les bords circulaires 6 et 7 des flancs 2 et 3 sont retournés vers l'intérieur de presque 180° et sont assemblés l'un contre l'autre, sur leur face

convexe (figure 4), par une soudure souple 8. Deux pavés de raccordement 9 et 10 permettent le branchement au circuit hydraulique. On voit sur la coupe de la figure 6, qu'ils comportent une embase allongée 11 dont la base 12 est conformée en U pour s'adapter à l'obturateur 4 sur lequel ils sont brasés.

La fabrication du vérin ultra-plat de l'invention est la suivante.

On découpe les flancs au rayon R + 5 mm, on les ébavure et on les recuit.

On serre ensuite deux flancs 2 et 3 bien symétriquement entre un disque 12 et une forme en dépouille 13 en laissant dépasser régulièrement de 5 mm (figure 5). L'ensemble est monté sur un tour 14.

On arrondit alors les parties dépassantes des tôles au moyen d'un outil adéquat, jusqu'à débordement de 3 mm.

On rabat les bords 6 et 7 à l'aide d'une molette 15, jusqu'à ce qu'ils épousent la forme en serrant avec la molette sur le bord en dépouille 13, la vitesse de rotation du tour étant minimale. On démonte les flancs et on usine le bord rabattu pour obtenir la cote de largeur 2 mm, soit la moitié de l'épaisseur du vérin.

Pour la fabrication de l'obturateur 4, on découpe une bande de tôle à la largeur de 10 mm et de longueur égale à celle des bords rectilignes des flancs, et on donne à la bande de tôle sa forme en U par matriçage dans une matrice 16 à l'aide d'une barrette de poinçonnage 17 (figure 7).

A l'aide de cales intérieures, on fixe les deux flancs suivant leurs bords circulaires 6, 7 avec une soudure souple, puis on soude l'obturateur 4.

On brase les pavés de raccordement 9 et 10 sur l'obturateur, puis on perce un trou de 2 mm dans l'obturateur 4 dans l'axe du trou fileté 18 prévu dans chaque pavé.

Au fonctionnement, on peut utiliser l'un quelconque des blocs de raccordement, l'autre pouvant être bouché après remplissage d'huile, par une vis-bouchon.

Un ébavurage général termine la fabrication.

Lorsqu'ils sont placés dans l'entaille réalisée dans le milieu ausculté (figure 2), les vérins s'appuient au bord de l'entaille par les épaulements 19 des pavés de raccordement 9 et 10.

Des vérins fabriqués selon ce procédé ont été contrôlés pour tester leur capacité à rétablir le champ de contraintes et de déplacements, perturbé par la présence d'une entaille dans un milieu sollicité.

Dans ce but, plusieurs essais ont été menés sur des modèles en Plexiglas par deux méthodes optiques complémentaires (test photo-élastique et test par le moiré).

Ces tests ont confirmé la qualité et la fiabilité des mesures effectuées par les vérins de l'invention et leur capacité d'assurer la transmission fidèle et uniforme d'une pression de 0 à 9 MPa.

**Revendications**

1. Vérin ultra-plat, comportant une chambre susceptible d'être mise sous pression et délimitée par deux flancs (2, 3) en regard, caractérisé en ce que lesdits flancs (2, 3) sont formés en segments de cercle, les bords rectilignes des flancs (2, 3) étant assemblés au moyen d'un obturateur rectiligne, les bords circulaires (6, 7) des flancs étant retournés vers l'intérieur de plus de 90° et assemblés l'un contre l'autre.

2. Vérin selon la revendication 1, caractérisé en ce que les bords circulaires (6, 7) des flancs sont assemblés par une soudure souple (8).

3. Vérin selon l'une quelconque des revendications 1 ou 2, caractérisé en ce que les bords rectilignes des flancs (2, 3) sont assemblés au moyen d'un obturateur (4) en U.

4. Vérin selon l'une quelconque des revendications 1 à 3, caractérisé en ce que les flancs (2, 3) sont réalisés dans une tôle de 0,4 mm d'épaisseur.

5. Vérin selon l'une quelconque des revendications 1 à 4, caractérisé en ce qu'il a environ 4 mm d'épaisseur.

6. Vérin selon l'une quelconque des revendications 1 à 5, caractérisé en ce qu'il comporte au moins un pavé de raccordement (9, 10) au circuit hydraulique.

7. Procédé de fabrication d'un vérin ultra-plat, comportant une chambre susceptible d'être mise sous pression et délimitée par deux flancs (2, 3) en regard, caractérisé en ce qu'on utilise des flancs (2, 3) en segments de cercle, en ce qu'on retourne intérieurement de plus de 90° les bords circulaires (6, 7) des flancs en les rabattant à l'aide d'une molette (15) contre le bord d'une forme en dépouille (13), puis on assemble les flancs bord à bord.

8. Procédé selon la revendication 7, caractérisé en ce qu'on serre les deux flancs (2, 3) symétriquement entre un disque (12) et une forme en dépouille (13) en laissant dépasser régulièrement le bord circulaire (6, 7) à retourner.

9. Procédé selon l'une quelconque des revendications 7 ou 8, caractérisé en ce qu'on réalise un obturateur (4) en U par matriçage dans une forme (16, 17) et on brase l'obturateur (4) sur les bords rectilignes des flancs (2, 3).

**Claims**

1. Ultra-flat tester, comprising a chamber capable of being placed under pressure and defined by two facing side plates (2, 3), characterized in that said side plates (2, 3) are shaped as circular segments, the rectilinear edges of said side plates (2, 3) being assembled by means of a rectilinear obturator, the circular edges (6, 7) of the side plates being turned back towards one another by more than 90° and assembled to one another.

2. Tester according to claim 1, characterized in that the circular edges (6, 7) of the side plates are assembled by a flexible weld (8).

3. Tester according to any one of claims 1 or 2, characterized in that the rectilinear edges of said side plates (2, 3) are assembled by means of a U shaped obturator (4).

4. Tester according to any one of claims 1 to 3, characterized in that the side plates (2, 3) are formed of sheet metal of 0.4 mm thickness.

5. Tester according to any one of claims 1 to 4, characterized in that it has a thickness of about 4 mm.

6. Tester according to any one of claims 1 to 5, characterized in that it comprises at least one coupling element (9, 10) to the hydraulic circuit.

7. Process for manufacturing an ultra-flat tester, comprising a chamber capable of being placed under pressure and defined by two facing side plates (2, 3), characterized in that side plates shaped as circular segments are used, in that the circular edges (6, 7) of the side plates are turned back towards one another by more than 90° by pressing them down by means of a milling wheel (15) against the edge of a tapered former (13), then the side plates are butt-jointed.

8. Process according to claim 7, characterized in that the two side plates (2, 3) are enclosed symmetrically between a disc (12) and a tapered former (13) leaving a regular overlapping portion of the circular edge (6, 7) to be turned back.

9. Process according to any one of claims 7 or 8, characterized in that a U shaped obturator is made by press-forming in a die (16, 17), then the obturator (4) is brazed on the rectilinear edges of the side plates (2, 3).


**Patentansprüche**

1. Ultraflacher Druckzylinder mit einer unter Druck setzbaren und von zwei gegenüberliegenden Flanken (2, 3) begrenzten Kammer, dadurch gekennzeichnet, daß die Flanken (2, 3) als Kreissegmente ausgebildet sind, wobei die geradlinigen Borde der Flanken (2, 3) mittels eines geradlinigen Verschlusses zusammengesetzt sind und die kreisförmigen Borde (6, 7) der Flanken um mehr als 90° nach innen umgeschlagen und aneinandergefügt sind.

2. Druckzylinder nach Anspruch 1, dadurch gekennzeichnet, daß die kreisförmigen Borde (6, 7) der Flanken durch eine nachgiebige Schweißnaht (8) aneinandergefügt sind.

3. Druckzylinder nach einem der Ansprüche 1 oder 2, dadurch gekennzeichnet, daß die geradlinigen Borde der Flanken (2, 3) mittels eines U-förmigen Verschlusses (4) aneinandergefügt sind.

4. Druckzylinder nach einem der Ansprüche 1 bis 3, dadurch gekennzeichnet, daß die Flanken (2, 3) aus einem Blech mit einer Stärke von 0,4 mm hergestellt sind.

5. Druckzylinder nach einem der Ansprüche 1 bis 4, dadurch gekennzeichnet, daß er eine Stärke von 4 mm aufweist.

6. Druckzylinder nach einem der Ansprüche 1 bis 5, dadurch gekennzeichnet, daß er mindestens einen Anschlußblock (9, 10) zu einem Hydraulikkreislauf umfaßt.

7. Verfahren zur Herstellung eines ultraflachen Druckzylinders mit einer unter Druck setzbaren und von zwei gegenüberliegenden Flanken (2, 3) begrenzten Kammer, dadurch gekennzeichnet, daß man Flanken (2, 3) in Kreissegmentform verwendet, daß man die kreisförmigen Borde (6, 7) der Flanken um mehr als 90° nach innen umschlägt, indem man sie mit Hilfe einer Molette (15) gegen den Bord einer sich verjüngenden Form (13) umstülpt, und man dann die Flanken Bord an Bord aneinanderfügt.

8. Verfahren nach Anspruch 7, dadurch gekennzeichnet, daß man die beiden Flanken (2, 3) symmetrisch zwischen eine Scheibe (12) und eine sich verjüngende Form (13) klemmt, indem man den umzuschlagenden kreisförmigen Bord (6, 7) regelmäßig überstehen läßt.

9. Verfahren nach einem der Ansprüche 7 oder 8, dadurch gekennzeichnet, daß man einen U-förmigen Verschluß (4) durch Formen in einer Matrize (16, 17) herstellt und den Verschluß (4) an den geradlinigen Borden der Flanken (2, 3) anlötet.

Fig. 1

Fig. 2

Fig. 3

Fig. 4

Fig. 5

Fig. 6

Fig. 7